(19)

Europäisches Patentamt
European Patent Office
Office européen des brevets

(11) **EP 4 432 574 A1**

(12) **EUROPEAN PATENT APPLICATION**
published in accordance with Art. 153(4) EPC

(43) Date of publication:
**18.09.2024   Bulletin 2024/38**

(51) International Patent Classification (IPC):
**H04B 7/06** (2006.01)          **H04B 7/0456** (2017.01)
**H04L 1/00** (2006.01)

(21) Application number: **21964170.1**

(52) Cooperative Patent Classification (CPC):
**H04B 7/0456; H04B 7/06; H04L 1/00**

(22) Date of filing: **11.11.2021**

(86) International application number:
**PCT/KR2021/016433**

(87) International publication number:
**WO 2023/085460 (19.05.2023 Gazette 2023/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **LG Electronics Inc.**
**Yeongdeungpo-gu**
**Seoul 07336 (KR)**

(72) Inventors:
• **JO, Minseok**
  **Seoul 06772 (KR)**

• **LEE, Sangrim**
  **Seoul 06772 (KR)**
• **KIM, Bonghoe**
  **Seoul 06772 (KR)**
• **JUNG, Ikjoo**
  **Seoul 06772 (KR)**
• **LEE, Kyungho**
  **Seoul 06772 (KR)**

(74) Representative: **Plasseraud IP**
**104 Rue de Richelieu**
**CS92104**
**75080 Paris Cedex 02 (FR)**

(54) **METHOD, BASE STATION, AND PROCESSING DEVICE FOR RECEIVING CHANNEL STATE INFORMATION**

(57)     A base station: receives respective CSI feedback (q_1) to (q_K) from user equipments 1 to K; and determines a precoding vector for the user equipment k on the basis of the CSI feedback (q_1) to (q_K), where, k = 0,..., K. The determining of the precoding vector for the user equipment k on the basis of the CSI feedback (q_1) to (q_K) may comprise determining the precoding vector for the user equipment k through a decoder on the basis of i) a value of the sum of CSI feedback (q_1) to (q_k-1) and (q_k+1) to (q_K) from the remaining user equipments 1 to (k-1) and (k+1) to K except for the user equipment k among the user equipments 1 to K, and ii) CSI feedback (q_k) from the user equipment k.

**FIG. 16**

EP 4 432 574 A1

**Description**

**TECHNICAL FIELD**

The present disclosure relates to a wireless communication system.

**BACKGROUND**

A variety of technologies, such as machine-to-machine (M2M) communication, machine type communication (MTC), and a variety of devices demanding high data throughput, such as smartphones and tablet personal computers (PCs), have emerged and spread. Accordingly, the volume of data throughput demanded to be processed in a cellular network has rapidly increased. In order to satisfy such rapidly increasing data throughput, carrier aggregation technology or cognitive radio technology for efficiently employing more frequency bands and multiple input multiple output (MIMO) technology or multi-base station (BS) cooperation technology for raising data capacity transmitted on limited frequency resources have been developed.

As more and more communication devices have required greater communication capacity, there has been a need for enhanced mobile broadband (eMBB) communication relative to legacy radio access technology (RAT). In addition, massive machine type communication (mMTC) for providing various services at anytime and anywhere by connecting a plurality of devices and objects to each other is one main issue to be considered in next-generation (e.g., 5G) communication.

Communication system design considering services/user equipment (UEs) sensitive to reliability and latency is also under discussion. The introduction of next-generation RAT is being discussed in consideration of eMBB communication, mMTC, ultra-reliable and low-latency communication (URLLC), and the like.

While 5G communication is still under development, there is an increasing demand for higher data rates to accommodate new services such as virtual reality and autonomous driving.

**DISCLOSURE**

**Technical Problem**

As new radio communication technology has been introduced, the number of UEs to which a BS should provide services in a prescribed resource region is increasing and the volume of data and control information that the BS transmits/receives to/from the UEs to which the BS provides services is also increasing. Since the amount of resources available to the BS for communication with the UE(s) is limited, a new method for the BS to efficiently receive/transmit uplink/downlink data and/or uplink/downlink control information from/to the UE(s) using the limited radio resources is needed. In other words, due to increase in the density of nodes and/or the density of UEs, a method for efficiently using high-density nodes or high-density UEs for communication is needed.

A method to efficiently support various services with different requirements in a wireless communication system is also needed.

Overcoming delay or latency is an important challenge to applications, performance of which is sensitive to delay/latency.

There is a demand for methods of appropriately applying neural network (NN) technology to communication to meet the requirements for higher data rates.

The objects to be achieved with the present disclosure are not limited to what has been particularly described hereinabove and other objects not described herein will be more clearly understood by persons skilled in the art from the following detailed description.

**Technical Solution**

According to an aspect of the present disclosure, provided is a method of receiving channel state information (CSI) by a base station (BS) in a wireless communication system. The method includes receiving respective CSI feedbacks $q\_1$ to $q\_K$ from user devices 1 to K, and determining a precoding vector for a user device k based on the CSI feedbacks $q\_1$ to $q\_K$, where k = 0, ..., and K. The determining of the precoding vector for the user device k based on the CSI feedbacks $q\_1$ to $q\_K$ includes determining the precoding vector for the user device k through a decoder based on i) a sum value of CSI feedbacks $q\_1$ to $q\_{k-1}$ and $q\_{k+1}$ to $q\_K$ from remaining user devices 1 to k-1 and k+1 to K excluding the user device k from among the user devices 1 to K and ii) CSI feedback $q\_k$ from the user device k.

According to another aspect of the present disclosure, provided is a base station (BS) for receiving channel state information (CSI) in a wireless communication system. The BS includes at least one transceiver, at least one processor, and at least one computer memory operably connected to the at least one processor and configured to store instructions that, when executed, cause the at least one processor to perform operations. The operations include receiving respective CSI feedbacks $q\_1$ to $q\_K$ from user devices 1 to K, and determining a precoding vector for a user device k based on the CSI feedbacks $q\_1$ to $q\_K$, where k = 0, ..., and K. The determining of the precoding vector for the user device k based on the CSI feedbacks $q\_1$ to $q\_K$ includes determining the precoding vector for the user device k through a decoder based on i) a sum value of CSI feedbacks $q\_1$ to $q\_{k-1}$ and $q\_{k+1}$ to $q\_K$ from remaining user devices 1 to k-1 and k+1 to K excluding the user device k from among the user devices 1 to K and ii) CSI feedback $q\_k$ from the user device k.

According to another aspect of the present disclosure, provided is a processing device. The processing device includes at least one processor, and at least one computer memory operably connected to the at least one processor and configured to store instructions that, when executed, cause the at least one processor to perform operations. The operations include receiving respective channel state information (CSI) feedbacks $q\_1$ to $q\_K$ from user devices 1 to K, and determining a precoding vector for a user device k based on the CSI feedbacks $q\_1$ to $q\_K$, where k = 0, ..., and K. The determining of the precoding vector for the user device k based on the CSI feedbacks $q\_1$ to $q\_K$ includes determining the precoding vector for the user device k through a decoder based on i) a sum value of CSI feedbacks $q\_1$ to $q\_{k-1}$ and $q\_{k+1}$ to $q\_K$ from remaining user devices 1 to k-1 and k+1 to K excluding the user device k from among the user devices 1 to K and ii) CSI feedback $q\_k$ from the user device k.

According to each aspect of the present disclosure, the decoder may include a single CSI decoder. The precoding vector for each of the user devices 1 to K may be determined through the single CSI decoder.

According to each aspect of the present disclosure, the decoder may include respective CSI decoders $D\_1$ to $D\_K$ for the user devices 1 to K. The precoding vector for the user device k may be determined through a CSI decoder $D\_k$ from among the CSI decoders $D\_1$ to $D\_K$. The CSI decoders $D\_1$ to $D\_K$ may use a same weight and a same bias for all K.

According to each aspect of the present disclosure, a sum value of the CSI feedbacks $q\_1$ to $q\_{k-1}$ and $q\_{k+1}$ to $q\_K$ may be determined through an arithmetic operation on the CSI feedbacks $q\_1$ to $q\_{k-1}$ and $q\_{k+1}$ to $q\_K$.

According to each aspect of the present disclosure, the determining of the precoding vector for the user device k based on the CSI feedbacks $q\_1$ to $q\_K$ may include i) inputting a product of a sum of the CSI feedbacks $q\_1$ to $q\_{k-1}$ and $q\_{k+1}$ to $q\_K$ and $1/(K-1)$ to the decoder, and ii) inputting the CSI feedback $q\_k$ to the decoder.

The foregoing solutions are merely a part of the examples of the present disclosure and various examples into which the technical features of the present disclosure are incorporated may be derived and understood by persons skilled in the art from the following detailed description.

**Advantageous Effects**

According to some implementations of the present disclosure, a wireless communication signal may be efficiently transmitted/received. Accordingly, the overall throughput of a wireless communication system may be improved.

According to implementations of the present disclosure, a wireless communication system may efficiently support various services with different requirements.

According to some implementations of the present disclosure, delay/latency occurring during wireless communication between communication devices may be reduced.

According to some implementations of the present disclosure, encoder-decoder neural networks that are suitable for the number of users may be used while ensuring relatively robust encoding/decoding performance in response to changes in the number of users.

The effects according to the present disclosure are not limited to what has been particularly described hereinabove and other effects not described herein will be more clearly understood by persons skilled in the art related to the present disclosure from the following detailed description.

**BRIEF DESCRIPTION OF THE DRAWINGS**

The accompanying drawings, which are included to provide a further understanding of the present disclosure, illustrate examples of implementations of the present disclosure and together with the detailed description serve to explain implementations of the present disclosure:

FIG. 1 illustrates an example of a communication system 1 to which implementations of the present disclosure are applied;
FIG. 2 is a block diagram illustrating examples of communication devices capable of performing a method according to the present disclosure;
FIG. 3 illustrates another example of a wireless device capable of performing implementation(s) of the present disclosure;

FIG. 4 illustrates a perceptron structure used in an artificial neural network;

FIG. 5 illustrates a multilayer perceptron structure;

FIG. 6 illustrates the structure of a convolutional neural network (CNN);

FIG. 7 illustrates a filtering operation in a CNN;

FIGS. 8 and 9 illustrate channel and beam matrices formed between a transmission and reception point (TRP) and user equipments (UEs);

FIG. 10 illustrates an end-to-end multiuser downlink precoding system;

FIG. 11 illustrates an exemplary possible neural network (NN) architecture when an end-to-end multiuser precoding system is represented with an NN;

FIG. 12 illustrates a signum function available for an encoder NN according to the present disclosure;

FIG. 13 illustrates precoding performance (e.g., sum rate) according to the number of users $K$;

FIG. 14 illustrates a BS-side decoder NN;

FIG. 15 schematically illustrates encoder and decoder NN structures of the existing end-to-end multi-user precoding system;

FIG. 16 illustrates a decoder NN architecture according to some implementations of the present disclosure; and

FIG. 17 illustrates precoding performances of a decoder NN structure and different benchmark schemes according to some implementations of the present disclosure.

## DETAILED DESCRIPTION

Hereinafter, implementations according to the present disclosure will be described in detail with reference to the accompanying drawings. The detailed description, which will be given below with reference to the accompanying drawings, is intended to explain exemplary implementations of the present disclosure, rather than to show the only implementations that may be implemented according to the present disclosure. The following detailed description includes specific details in order to provide a thorough understanding of the present disclosure. However, it will be apparent to those skilled in the art that the present disclosure may be practiced without such specific details.

In some instances, known structures and devices may be omitted or may be shown in block diagram form, focusing on important features of the structures and devices, so as not to obscure the concept of the present disclosure. The same reference numbers will be used throughout the present disclosure to refer to the same or like parts.

A technique, a device, and a system described below may be applied to a variety of wireless multiple access systems. The multiple access systems may include, for example, a code division multiple access (CDMA) system, a frequency division multiple access (FDMA) system, a time division multiple access (TDMA) system, an orthogonal frequency division multiple access (OFDMA) system, a single-carrier frequency division multiple access (SC-FDMA) system, a multi-carrier frequency division multiple access (MC-FDMA) system, etc. CDMA may be implemented by radio technology such as universal terrestrial radio access (UTRA) or CDMA2000. TDMA may be implemented by radio technology such as global system for mobile communications (GSM), general packet radio service (GPRS), enhanced data rates for GSM evolution (EDGE) (i.e., GERAN), etc. OFDMA may be implemented by radio technology such as institute of electrical and electronics engineers (IEEE) 802.11 (Wi-Fi), IEEE 802.16 (WiMAX), IEEE 802.20, evolved-UTRA (E-UTRA), etc. UTRA is part of universal mobile telecommunications system (UMTS) and 3rd generation partnership project (3GPP) long-term evolution (LTE) is part of E-UMTS using E-UTRA. 3GPP LTE adopts OFDMA on downlink (DL) and adopts SC-FDMA on uplink (UL). LTE-advanced (LTE-A) is an evolved version of 3GPP LTE.

For convenience of description, description will be given under the assumption that the present disclosure is applied to LTE and/or new RAT (NR). However, the technical features of the present disclosure are not limited thereto. For example, although the following detailed description is given based on mobile communication systems corresponding to 3GPP LTE/NR systems, the mobile communication systems are applicable to other arbitrary mobile communication systems except for matters that are specific to the 3GPP LTE/NR system.

For terms and techniques that are not described in detail among terms and techniques used in the present disclosure, reference may be made to 3GPP based standard specifications, for example, 3GPP TS 36.211, 3GPP TS 36.212, 3GPP TS 36.213, 3GPP TS 36.321, 3GPP TS 36.300, 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.331, etc.

In examples of the present disclosure described later, if a device "assumes" something, this may mean that a channel transmission entity transmits a channel in compliance with the corresponding "assumption". This also may mean that a channel reception entity receives or decodes the channel in the form of conforming to the "assumption" on the premise that the channel has been transmitted in compliance with the "assumption".

In the present disclosure, a user equipment (UE) may be fixed or mobile. Each of various devices that transmit and/or receive user data and/or control information by communicating with a base station (BS) may be the UE. The term UE may be referred to as terminal equipment, mobile station (MS), mobile terminal (MT), user terminal (UT), subscriber station (SS), wireless device, personal digital assistant (PDA), wireless modem, handheld device, etc. In the present disclosure, the term user is used to refer to a UE. In the present disclosure, a BS refers to a fixed station that communicates with a UE and/or another BS and exchanges data and control information with a UE and another BS. The term BS may be referred to as advanced base station (ABS), Node-B (NB), evolved Node-B (eNB), base transceiver system (BTS), access point (AP), processing server (PS), etc. Particularly, a BS of a universal terrestrial radio access (UTRAN) is referred to as an NB, a BS of an evolved-UTRAN (E-UTRAN) is referred to as an eNB, and a BS of new radio access technology network is referred to as a gNB. Hereinbelow, for convenience of description, the NB, eNB, or gNB will be referred to as a BS regardless of the type or version of communication technology.

In the present disclosure, a transmission and reception point (TRP) refers to a fixed point capable of transmitting/receiving a radio signal to/from a UE by communication with the UE. Various types of BSs may be used as TRPs regardless of the names thereof. For example, a BS, NB, eNB, pico-cell eNB (PeNB), home eNB (HeNB), relay, repeater, etc. may be a TRP. Furthermore, a TRP may not be a BS. For example, a radio remote head (RRH) or a radio remote unit (RRU) may be a TRP. Generally, the RRH and RRU have power levels lower than that of the BS. Since the RRH or RRU (hereinafter, RRH/RRU) is connected to the BS through a dedicated line such as an optical cable in general, cooperative communication according to the RRH/RRU and the BS may be smoothly performed relative to cooperative communication according to BSs connected through a wireless link. At least one antenna is installed per TRP. An antenna may refer to a physical antenna port or refer to a virtual antenna or an antenna group. The TRP may also be called a point.

In the present disclosure, a cell refers to a specific geographical area in which one or more TRPs provide communication services. Accordingly, in the present disclosure, communication with a specific cell may mean communication with a BS or a TRP providing communication services to the specific cell. A DL/UL signal of the specific cell refers to a DL/UL signal from/to the BS or the TRP providing communication services to the specific cell. A cell providing UL/DL communication services to a UE is especially called a serving cell. Furthermore, channel status/quality of the specific cell refers to channel status/quality of a channel or a communication link generated between the BS or the TRP providing communication services to the specific cell and the UE. In 3GPP-based communication systems, the UE may measure a DL channel state from a specific TRP using cell-specific reference signal(s) (CRS(s)) transmitted on a CRS resource and/or channel state information reference signal(s) (CSI-RS(s)) transmitted on a CSI-RS resource, allocated to the specific TRP by antenna port(s) of the specific TRP.

A 3GPP-based communication system uses the concept of a cell in order to manage radio resources, and a cell related with the radio resources is distinguished from a cell of a geographic area.

The "cell" of the geographic area may be understood as coverage within which a TRP may provide services using a carrier, and the "cell" of the radio resources is associated with bandwidth (BW), which is a frequency range configured by the carrier. Since DL coverage, which is a range within which the TRP is capable of transmitting a valid signal, and UL coverage, which is a range within which the TRP is capable of receiving the valid signal from the UE, depend upon a carrier carrying the signal, coverage of the TRP may also be associated with coverage of the "cell" of radio resources used by the TRP. Accordingly, the term "cell" may be used to indicate service coverage by the TRP sometimes, radio resources at other times, or a range that a signal using the radio resources may reach with valid strength at other times.

In 3GPP communication standards, the concept of the cell is used in order to manage radio resources. The "cell" associated with the radio resources is defined by a combination of DL resources and UL resources, that is, a combination of a DL component carrier (CC) and a UL CC. The cell may be configured by the DL resources only or by the combination of the DL resources and the UL resources. If carrier aggregation is supported, linkage between a carrier frequency of the DL resources (or DL CC) and a carrier frequency of the UL resources (or UL CC) may be indicated by system information. In this case, the carrier frequency may be equal to or different from a center frequency of each cell or CC.

In a wireless communication system, the UE receives information on DL from the BS and the UE transmits information on UL to the BS. The information that the BS and UE transmit and/or receive includes data and a variety of control information and there are various physical channels according to types/usage of the information that the UE and the BS transmit and/or receive.

The 3GPP-based communication standards define DL physical channels corresponding to resource elements carrying information originating from a higher layer and DL physical signals corresponding to resource elements which are used by the physical layer but do not carry the information originating from the higher layer. For example, a physical downlink shared channel (PDSCH), a physical broadcast channel (PBCH), a physical multicast channel (PMCH), a physical control format indicator channel (PCFICH), a physical downlink control channel (PDCCH), etc. are defined as the DL physical channels, and a reference signal (RS) and a synchronization signal (SS) are defined as the DL physical signals. The RS, which is also referred to as a pilot, represents a signal with a predefined special waveform known to both the BS and the UE. For example, a demodulation reference signal (DMRS), a channel state information RS (CSI-RS), etc. are defined as DL RSs. The 3GPP-based communication standards define UL physical channels corresponding to resource elements carrying information originating from the higher layer and UL physical signals corresponding to resource elements which are used by the physical layer but do not carry the information originating from the higher layer. For example, a physical uplink shared channel (PUSCH), a physical uplink control channel (PUCCH), and a physical random access channel (PRACH) are defined as the UL physical channels, and a DMRS for a UL control/data signal, a sounding reference signal (SRS) used for UL channel measurement, etc. are defined.

In the present disclosure, the PDCCH refers to a set of time-frequency resources (e.g., a set of resource elements (REs)) that carry downlink control information (DCI), and the PDSCH refers to a set of time-frequency resources (e.g., a set of REs) that carry DL data. The PUCCH, PUSCH, and PRACH refer to a set of time-frequency resources (i.e., a set of REs) that carry uplink control information (UCI), UL data, and random access signals, respectively. In the following description, the meaning of "The UE transmits/receives the PUCCH/PUSCH/PRACH" is that the UE transmits/receives the UCI /UL data/random access signals on or through the PUCCH/PUSCH/PRACH, respectively. In addition, the meaning of "the BS transmits/receives the PBCH/PDCCH/PDSCH" is that the BS transmits the broadcast information/DCI/DL data on or through a PBCH/PDCCH/PDSCH, respectively.

In the present disclosure, a radio resource (e.g., a time-frequency resource) scheduled or configured for the UE by the BS for transmission or reception of PUCCH/PUSCH/PDSCH is also referred to as a PUCCH/PUSCH/PDSCH resource.

Since a communication device receives an SS/PBCH resource block (SSB), DMRS, CSI-RS, PBCH, PDCCH, PDSCH, PUSCH, and/or PUCCH in the form of radio signals on a cell, the communication device may not select and receive radio signals including only a specific physical channel or a specific physical signal through a radio frequency (RF) receiver, or may not select and receive radio signals without a specific physical channel or a specific physical signal through the RF receiver. In actual operations, the communication device receives radio signals on the cell via the RF receiver, converts the radio signals, which are RF band signals, into baseband signals, and then decodes physical signals and/or physical channels in the baseband signals using one or more processors. Thus, in some implementations of the present disclosure, reception of physical signals and/or physical channels may mean that a communication device does not attempt to restore the physical signals and/or physical channels from radio signals, for example, does not attempt to decode the physical signals and/or physical channels, rather than that the communication device does not actually receive the radio signals including the corresponding physical signals and/or physical channels.

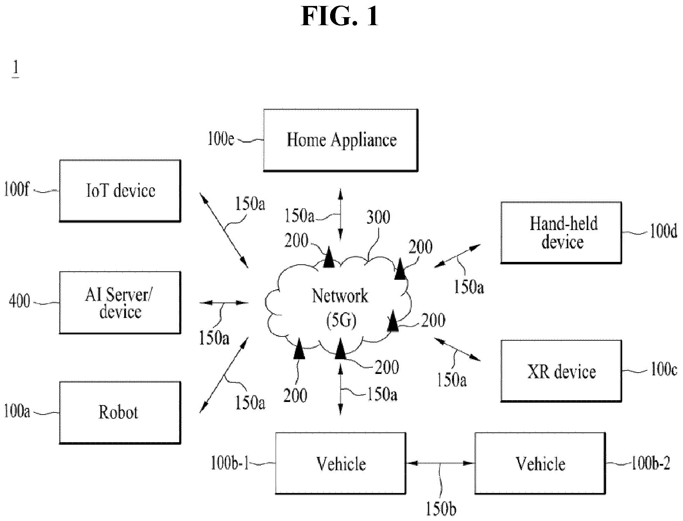

FIG. 1 illustrates an example of a communication system 1 to which implementations of the present disclosure are applied. Referring to FIG. 1, the communication system 1 applied to the present disclosure includes wireless devices, BSs, and a network. Here, the wireless devices represent devices performing communication using radio access technology (RAT) (e.g., 5G New RAT (NR) or LTE (e.g., E-UTRA), 6G) and may be referred to as communication/radio/5G devices. The wireless devices may include, without being limited to, a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 400. For example, the vehicles may include a vehicle having a wireless communication function, an autonomous driving vehicle, and a vehicle capable of performing vehicle-to-vehicle communication. Here, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may also be implemented as wireless devices and a specific wireless may operate as a BS/network node with respect to another wireless device.

The wireless devices 100a to 100f may be connected to a network 300 via BSs 200. AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network or 6G network to be introduced in the future. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. vehicle-to-vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a and 150b may be established between the wireless devices 100a to 100f and the BSs 200 and between the wireless devices 100a to 100f). Here, the wireless communication/connections such as UL/DL communication 150a and sidelink communication 150b (or, device-to-device (D2D) communication) may be established by various RATs. The wireless devices and the BSs/wireless devices may transmit/receive radio signals to/from each other through the wireless communication/connections 150a and 150b. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

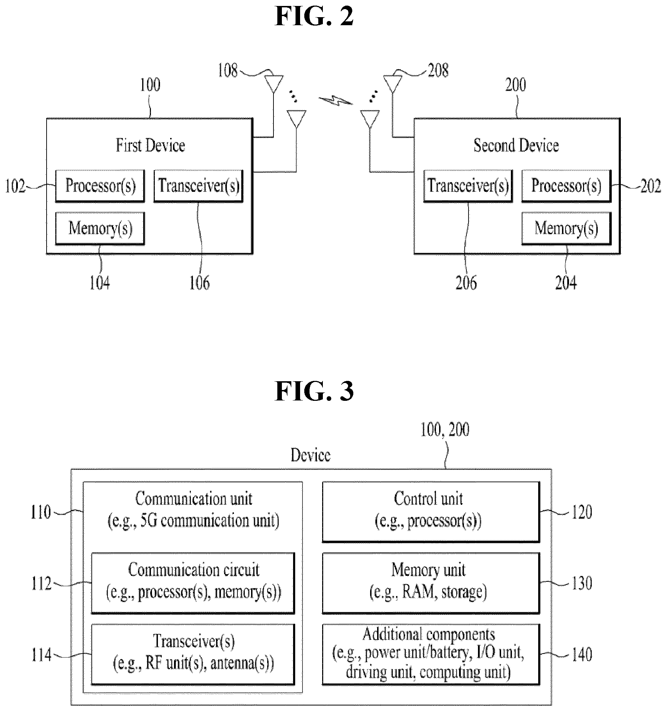

FIG. 2 is a block diagram illustrating examples of communication devices capable of performing a method according to the present disclosure. Referring to FIG. 2, a first wireless device 100 and a second wireless device 200 may transmit and/or receive radio signals through a variety of RATs. Here, {the first wireless device 100 and the second wireless device 200} may correspond to {the wireless device 100x and the BS 200} and/or {the wireless device 100x and the wireless device 100x} of FIG. 1.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the below-described /proposed functions, procedures, and/or methods. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver(s) 106 and then store information obtained by processing the second information/signals in the memory(s) 104. The memory(s) 104 may be connected to the processor(s) 102 and may store a variety of information related to operations of the processor(s) 102. For example, the memory(s) 104 may perform a part or all of processes controlled by the processor(s) 102 or store software code including instructions for performing the below-described/proposed procedures and/or methods. Here, the processor(s) 102 and the memory(s) 104 may be a part of a communication modem/circuit/chip designed to implement wireless communication technology. The transceiver(s) 106 may be connected to the processor(s) 102 and transmit and/or receive radio signals through one or more antennas 108. Each of the transceiver(s) 106 may include a transmitter and/or a receiver. The transceiver(s) 106 is used interchangeably with radio frequency (RF) unit(s). In the present disclosure, the wireless device may represent the communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the afore/below-described/proposed functions, procedures, and/or methods. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may perform a part or all of processes controlled by the processor(s) 202 or store software code including instructions for performing the afore/below-described/proposed procedures and/or methods. Here, the processor(s) 202 and the memory(s) 204 may be a part of a communication modem/circuit/chip designed to implement wireless communication technology. The transceiver(s) 206 may be connected to the processor(s) 202 and transmit and/or receive radio signals through one or more antennas 208. Each of the transceiver(s) 206 may include a transmitter and/or a receiver. The transceiver(s) 206 is used interchangeably with RF unit(s). In the present disclosure, the wireless device may represent the communication modem/circuit/chip.

The wireless communication technology implemented in the wireless devices 100 and 200 of the present disclosure may include narrowband Internet of Things for low-power communication as well as LTE, NR, and 6G communications. For example, NB-IoT technology may be an example of Low Power Wide Area Network (LPWAN) technology, and may be implemented by, but is limited to, standards such as LTE Cat NB1 and/or LTE Cat NB2. Additionally or alternatively, the wireless communication technology implemented in the wireless devices XXX and YYY of the present disclosure may perform communication based on the LTE-M technology. For example, the LTE-M technology may be an example of the LPWAN technology, and may be called by various names such as enhanced machine type communication (eMTC). For example, the LTE-M technology may be implemented by, but is not limited to, at least one of various standards such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M. Additionally or alternatively, the wireless communication technology implemented in the wireless devices XXX and YYY of the present disclosure may include, but is not limited to, at least one of ZigBee, Bluetooth, and Low Power Wide Area Network (LPWAN) considering low-power communication. For example, the ZigBee technology may create personal area networks (PAN) related to small/low-power digital communications based on various standards such as IEEE 802.15.4, and may be called by various names.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as a physical (PHY) layer, medium access control (MAC) layer, a radio link control (RLC) layer, a packet data convergence protocol (PDCP) layer, radio resource control (RRC) layer, and a service data adaptation protocol (SDAP) layer). The one or more processors 102 and 202 may generate one or more protocol data units (PDUs) and/or one or more service data units (SDUs) according to the functions, procedures, proposals, and/or methods disclosed in the present disclosure. The one or more processors 102 and 202 may generate messages, control information, data, or information according to the functions, procedures, proposals, and/or methods disclosed in the present disclosure. The one or more processors 102 and 202 may generate signals (e.g., baseband signals) including PDUs, SDUs, messages, control information, data, or information according to the functions, procedures, proposals, and/or methods disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the functions, procedures, proposals, and/or methods disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The functions, procedures, proposals, and/or methods disclosed in the present disclosure may be implemented using firmware or software, and the firmware or software may be configured to include the modules, procedures, or functions. Firmware or software configured to perform the functions, procedures, proposals, and/or methods disclosed in the present disclosure may be included in the one or more processors 102 and 202 or stored in the one or more memories 104 and 204 so as to be driven by the one or more processors 102 and 202. The functions, procedures, proposals, and/or methods disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, commands, and/or instructions. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of the present disclosure, to one or more other devices. The one or more transceivers 106 and 206 may receive user data, control information, and/or radio signals/channels, mentioned in the functions, procedures, proposals, methods, and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208. The one or more transceivers 106 and 206 may be configured to transmit and receive user data, control information, and/or radio signals/channels, mentioned in the functions, procedures, proposals, methods, and/or operational flowcharts disclosed in the present disclosure, through the one or more antennas 108 and 208. In the present disclosure, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 3 illustrates another example of a wireless device capable of performing implementation(s) of the present disclosure. Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 2. For example, the transceiver(s) 114 may include the one or more transceivers 106 and 206 and/or the one or more antennas 108 and 208 of FIG. 2. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast UE, a hologram device, a public safety device, an MTC device, a medicine device, a fintech device (or a finance device), a security device, a climate/environment device, the AI server/device (400 of FIG. 1), the BS (200 of FIG. 1), a network node, etc. The wireless device may be used in a mobile or fixed place according to a use-case/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an electronic control unit (ECU), a graphical processing unit, and a memory control processor. As another example, the memory 130 may be configured by a random access memory (RAM), a dynamic RAM (DRAM), a read-only memory (ROM)), a flash memory, a transitory memory, a non-transitory memory, and/or a combination thereof.

In the present disclosure, the at least one memory (e.g., 104 or 204) may store instructions or programs, and the instructions or programs may cause, when executed, at least one processor operably connected to the at least one memory to perform operations according to some embodiments or implementations of the present disclosure.

In the present disclosure, a computer readable (non-transitory) storage medium may store at least one instruction or program, and the at least one instruction or program may cause, when executed by at least one processor, the at least one processor to perform operations according to some embodiments or implementations of the present disclosure.

In the present disclosure, a processing device or apparatus may include at least one processor, and at least one computer memory operably connected to the at least one processor. The at least one computer memory may store instructions or programs, and the instructions or programs may cause, when executed, the at least one processor operably connected to the at least one memory to perform operations according to some embodiments or implementations of the present disclosure.

In the present disclosure, a computer program may include program code stored on at least one computer-readable (non-transitory) storage medium and, when executed, configured to perform operations according to some implementations of the present disclosure or cause at least one processor to perform the operations according to some implementations of the present disclosure. The computer program may be provided in the form of a computer program product. The computer program product may include at least one computer-readable (non-transitory) storage medium

A communication device of the present disclosure includes at least one processor; and at least one computer memory operably connected to the at least one processor and configured to store instructions for causing, when executed, the at least one processor to perform operations according to example(s) of the present disclosure described later.

Wireless communication systems are extensively deployed to provide various types of communication services such as voice and data. The demand for higher data rates is increasing to accommodate incoming new services and/or scenarios where the virtual and real worlds blend. To address these ever-growing demands, new communication technologies beyond 5G are required. New communication technologies beyond 6G systems (hereinafter referred to as 6G) aim to achieve (i) extremely high data speeds per device, (ii) very large number of connected devices, (iii) global connectivity, (iv) ultra-low latency, (v) reducing energy consumption of battery-free IoT devices, (vi) ultra-reliable connections, (vii) connected intelligence with machine learning capabilities. In the 6G system, the following technologies are being considered: artificial intelligence (AI), terahertz (THz) communication, optical wireless communication (OWC), free space optics (FSO) backhaul network, massive multiple-input multiple-output (MIMO) technology, blockchain, three-dimensional (3D) networking, quantum communication, unmanned aerial vehicle (UAV), cell-free communication, integration of wireless information and energy transmission, integration of sensing and communication, integration of access backhaul networks, hologram beamforming, big data analysis, large intelligent surface (LIS), and so on.

In particular, there has been a rapid increase in attempts to integrate AI into communication systems. Methods being attempted in relation to AI may be broadly categorized into two: AI for communications (AI4C), which uses AI to enhance communication performance, and communications for AI (C4AI), which develops communication technologies to support AI. In the AI4C field, designs have been attempted to replace the roles of channel encoders/decoders, modulators/demodulators, or channel equalizers with end-to-end autoencoders or neural networks. In the C4AI field, as one type of distributed learning, federated learning involves updating a common prediction model by sharing only the weights and gradients of models with the server without sharing device raw data while protecting privacy.

Introducing AI into communications may simplify and enhance real-time data transmission. AI may use numerous analytics to determine a method of performing complex target tasks. In other words, AI may increase efficiency and reduce processing delays.

Time-consuming tasks such as handover, network selection, and resource scheduling may be instantly performed using AI. AI may also play a significant role in machine-to-machine, machine-to-human, and human-to-machine communications. AI-based communication systems may be supported by meta-materials, intelligent architectures, intelligent networks, intelligent devices, intelligence cognitive radio, self-sustaining wireless networks, and machine learning.

Recent attempts to integrate AI into wireless communication systems have primarily focused on the application layer, network layer, and particularly on wireless resource management and allocation. However, research into integrating AI into wireless communication systems is increasingly evolving towards the MAC layer and the physical layer. In particular, there are emerging attempts to combine deep learning with wireless transmission at the physical layer. AI-based physical layer transmission refers to applying signal processing and communication mechanisms based on AI drivers rather than traditional communication frameworks in fundamental signal processing and communication mechanisms. For example, the AI-based physical layer transmission may include deep learning-based channel coding and decoding, deep learning-based signal estimation and detection, deep learning-based MIMO mechanisms, AI-based resource scheduling and allocation, and the like.

Machine learning may be used for channel estimation and channel tracking. Machine learning can be used for power allocation, interference cancellation, etc. in the DL physical layer. Machine learning may also be used in MIMO systems for antenna selection, power control, and symbol detection.

However, applying deep neural networks for transmission at the physical layer may have the following issues.

Deep learning-based AI algorithms require a large amount of training data to optimize training parameters. However, due to limitations in acquiring data from specific channel environments, a significant amount of training data is often used offline. Static training of training data in specific channel environments may lead to contradictions between the dynamic features and diversity of wireless channels.

Furthermore, current deep learning primarily targets real signals. However, signals at the physical layer of wireless communication are complex signals. More research is needed on neural networks for detecting complex-domain signals to match the characteristics of wireless communication signals.

Hereinafter, machine learning will be described in detail.

Machine learning refers to a series of operations for training machines to perform tasks that are difficult to be performed by human. Machine learning requires data and learning models. In machine learning, data learning methods may be broadly categorized into three types: supervised learning, unsupervised learning, and reinforcement learning.

Neural network learning aims to minimize errors in outputs. Neural network learning refers to a process of repeatedly inputting training data to a neural network, calculating the error of the output and target of the neural network for the training data, backpropagating the error of the neural network from the output layer of the neural network to the input layer to reduce the error, and updating the weight of each node of the neural network.

Supervised learning may use training data labeled with a correct answer, whereas unsupervised learning may use training data that is not labeled with a correct answer. For example, in the case of supervised learning for data classification, training data may be labeled with each category. The labeled training data may be input to the neural network, and the output (category) of the neural network may be compared with the label of the training data, thereby calculating the error. The calculated error may be backpropagated through the neural network in reverse (that is, from the output layer to the input layer), and the connection weight(s) of each node of each layer of the neural network may be updated based on the backpropagation. Changes in the updated connection weight(s) of each node may be determined based on the learning rate. The calculation of the neural network for input data and the backpropagation of the error may configure a learning epoch. The learning data may be applied differently depending on the number of repetitions of the learning epoch of the neural network. For example, in the early phase of learning of the neural network, a high learning rate may be used to increase efficiency such that the neural network rapidly ensures a certain level of performance, but in the late phase of learning, a low learning rate may be used to increase accuracy.

The learning method may vary depending on the feature of data. For example, learning may be performed based on supervised learning rather than unsupervised learning or reinforcement learning to allow a receiver to accurately predict data transmitted from a transmitter in a communication system.

The learning model corresponds to the human brain. To this end, the most basic linear model may be considered. However, a machine learning paradigm that uses highly complex neural network structures such as artificial neural networks as learning models is referred to as deep learning.

Neural network cores used for learning may be broadly categorized into a deep neural network (DNN), a convolutional deep neural network (CNN), and a recurrent neural machine (RNN).

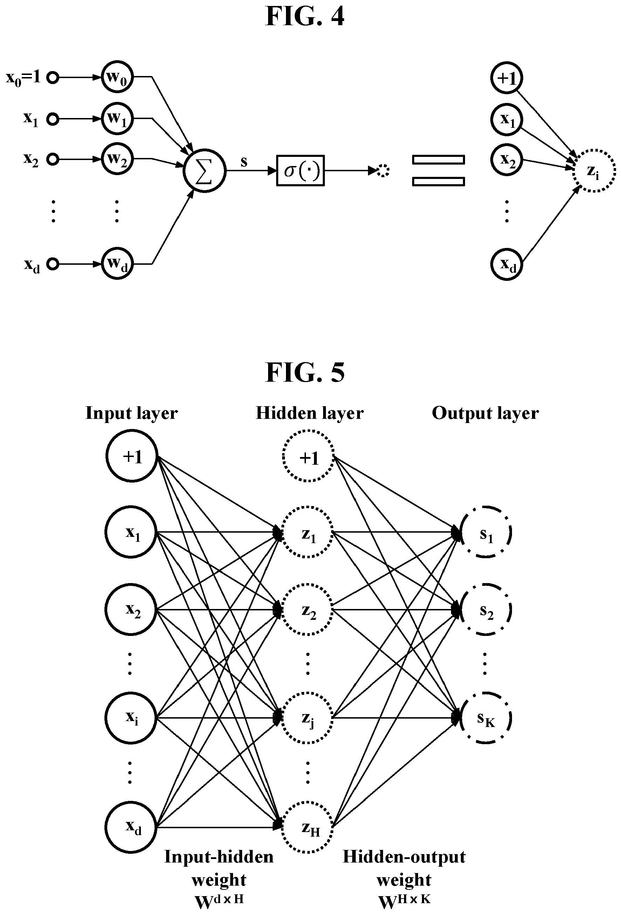

FIG. 4 illustrates a perceptron structure used in an artificial neural network.

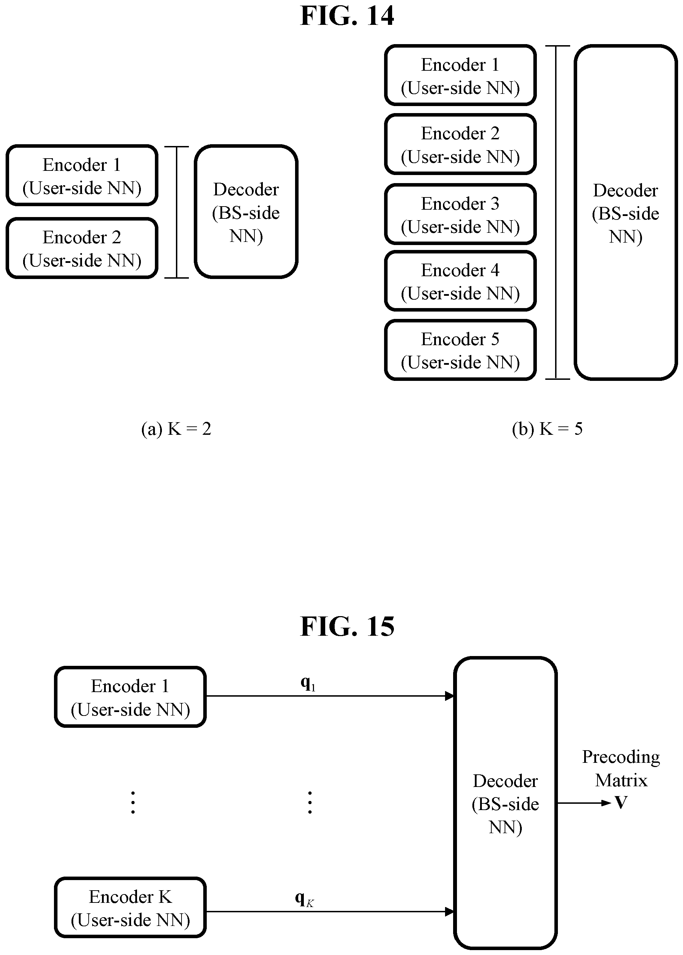

An artificial neural network may be implemented by connecting multiple perceptrons. Referring to FIG. 4, a process of receiving an input vector of $\mathbf{x} = (\mathbf{x}_1, \mathbf{x}_2, ..., \mathbf{x}_d)$, multiplying each component by a weight of $\mathbf{w} = (\mathbf{w}_1, \mathbf{w}_2, ..., \mathbf{w}_d)$, summing up the results, and then applying an activation function of $\sigma(\cdot)$ is referred to as a perceptron. For a large artificial neural network structure, the simplified perceptron structure shown in FIG. 14 may be extended. For a large artificial neural network structure, the simplified perceptron structure shown in FIG. 4 may be extended and applied to a multi-dimensional perceptron with different input vectors.

FIG. 5 illustrates a multilayer perceptron structure.

The perceptron structure shown in FIG. 4 may be extended to a multilayer perceptron structure having a total of three layers based on input and output values. An artificial neural network having H perceptrons of (d+1) dimensions between the first and second layers and K perceptrons of (H+1) dimensions between the second and third layers may be represented by the multilayer perceptron structure shown in FIG. 5.

A layer where input vectors are located is called an input layer, a layer where final output value(s) are located is called an output layer, and all layers between the input and output layers are referred to as hidden layers. In the example of FIG. 5, three layers are illustrated. However, since the actual number of layers in an artificial neural network is counted excluding the input layer, the artificial neural network based on the multilayer perceptron structure in FIG. 5 may be considered as having two layers. An artificial neural network is constructed by two-dimensionally connecting perceptrons of basic blocks.

In a neural network, layers are composed of small individual units called neurons. In the neural network, neurons receive inputs from other neurons, perform processing, and produce outputs. A region within the previous layer where each neuron receives inputs is called a receptive field. Each neuron computes output values by applying a specific function to input values received from the receptive field within the previous layer. The specific function applied to the input values is determined by i) a vector of weights and ii) biases. Learning in the neural network is performed based on iterative adjustment of the biases and weights. The vector of weights and the biases are called filters, which represent particular features of the input.

The aforementioned input layer, hidden layer, and output layer may be commonly applied not only to the multilayer perceptron structure but also to various artificial neural network structures such as CNNs, which will be discussed later. As the number of hidden layers increases, the artificial neural network becomes deeper, and the machine learning paradigm that uses sufficiently deep artificial neural networks as learning models is called deep learning. In addition, an artificial neural network used for deep learning are called DNNs.

The aforementioned multilayer perceptron structure is referred to as a fully-connected neural network. In the fully-connected neural network, there are no connections between neurons within the same layer, and connections exist only between neurons in adjacent layers. A DNN, which has the fully-connected neural network structure, includes multiple hidden layers and combinations of activation functions, and thus the DNN may be effectively applied to capture the characteristics of correlation between inputs and outputs. Here, the correlation characteristic may mean the joint probability of inputs and outputs.

On the other hand, various artificial neural network structures distinct from the DNN may be formed depending on how multiple perceptrons are connected to each other.

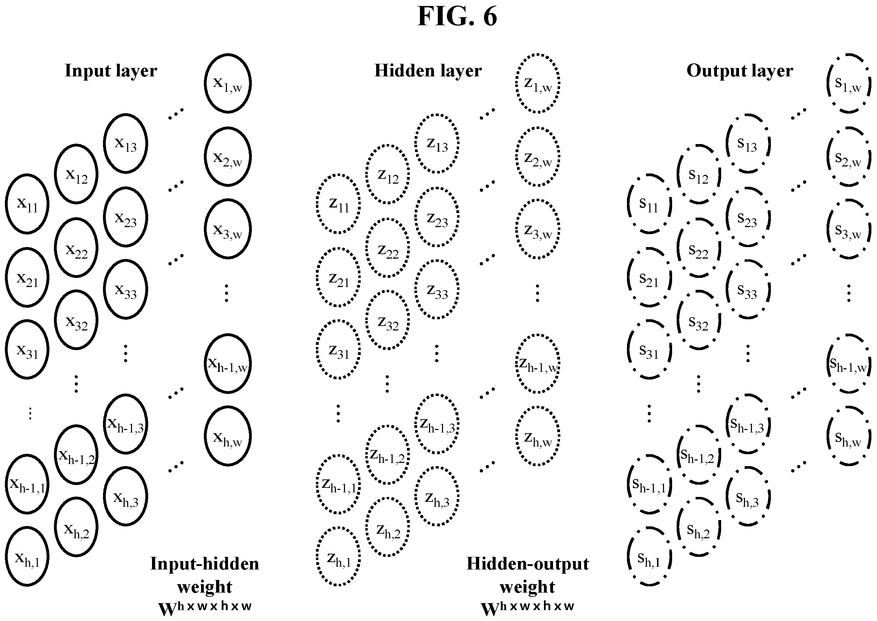

FIG. 6 illustrates the structure of a CNN.

In a DNN, neurons within a layer are arranged in a one-dimensional manner. However, referring to FIG. 6, in the CNN, neurons may be assumed to be arranged in a two-dimensional manner, with w neurons horizontally and h neurons vertically. In this case, since a weight is added for each connection from a single input neuron to hidden layers, a total of $h \times w$ weights need to be considered. Since there are $h \times w$ neurons in input layers, a total of $h^2 w^2$ weights are required between two adjacent layers.

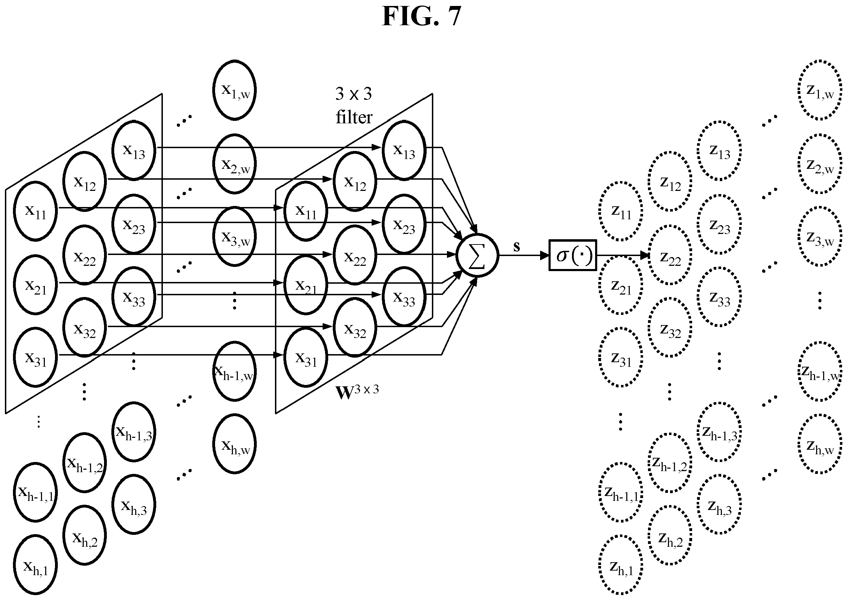

FIG. 7 illustrates a filtering operation in a CNN.

The CNN shown in FIG. 6 faces the issue of an exponential increase in the number of weights depending on the number of connections. Thus, small-sized filters are assumed to exist instead of considering connections between all neurons in adjacent layers. Then, weighted sum and activation function operations are performed on overlapping regions of filter as shown in FIG. 7.

A single filter has weights corresponding to the size of the filter and may undergo learning of the weights such that the filter extracts specific features from an image as factors and produce outputs based on the factors. In FIG. 7, a $3 \times 3$ filter is applied to a top-left $3 \times 3$ region of an input layer, and an output value obtained by performing the weighted sum and activation function operations on related neurons is stored in $z_{22}$.

The filter scans the input layer, performs the weighted sum and activation function operations while moving horizontally and vertically at regular intervals, and places the output value at the current position of the filter. This operation method is similar to a convolution operation on images in the field of computer vision. Thus, a DNN with such a structure is called a CNN, and a hidden layer generated by the convolution operation is referred to as a convolutional layer. In addition, a neural network with multiple convolutional layers is called a deep convolutional neural network (DCNN).

In the convolutional layer, the weighted sum is calculated by considering only neuron(s) located within a region covered by the current filter, thereby reducing the number of weights. As a result, a single filter may focus on features within a local region. Therefore, the CNN may be effectively applied to process image data where a physical distance in two-dimensional space is an important criterion. In the CNN, multiple filters may be applied immediately before the convolutional layer, and multiple output results may be produced by convolution operations of each filter

The CNN may be divided into a part for extracting features from data and a part for classifying classes. In the CNN, the part for extracting features from data (hereinafter referred to as a feature extraction region) may be structured by stacking the following layers multiple times: an essential convolutional layer and an optional pooling layer. As the final part of the CNN, a fully connected layer for classifying classes is added. There is a flattening layer that converts image-type data into an array format between the part for extracting features from data and the part for classifying data.

As described above, the convolutional layer applies filters to input data and then incorporates the activation function, and the pooling layer is positioned after the convolutional layer. In the CNN, filters are also referred to as kernels. In the CNN, the filter performs the convolution operation by traversing the input data at specified intervals. The filter applied in the convolutional layer may create a feature map by moving at the specified intervals and performing the convolution operation on the entirety of the input data. For example, referring to FIG. 7, the output values: $z_{11}$ to $z_{h,w}$ may constitute the feature map. If multiple filters are applied to the convolutional layer, the convolution operation is performed for each filter, and the feature map may be created based on the sum of convolutions from the multiple filters. The feature map is also referred to as an activation map. In other words, the CNN consist of an input layer, hidden layers, and an output layer. In the CNN, the hidden layers include layers performing convolutions. Typically, the layer performing the convolution computes a dot product between a convolution kernel and the input matrix of the layer, and the activation function of the layer is commonly a rectified linear unit (ReLU). As the convolutional kernel slides over the input matrix of the layer, the convolution operation creates a feature map that contributes to the input of the next layer.

The pooling layer uses output data from the convolutional layer (e.g., feature map) as input data and reduces the size of the input data or emphasizes specific data. In the pooling layer, the following methods are used to process data: max pooling, which collects the maximum value of values within a specific region of a square matrix; average pooling, which calculates the average of values within a specific region of a square matrix; and min pooling, which determines the minimum value of values within a specific region of a square matrix.

The fully connected layer connects every neuron in one layer to every neuron in another layer.

In a wireless communication system, the BS may request UEs (i.e., users) within the coverage of the BS to report channel state information (CSI) on TRP(s) controlled by the BS. Each UE may calculate CSI based on RS(s) transmitted by the TRP(s) and report the CSI to the BS. The BS may perform scheduling for UE(s) based on the CSI received from the UEs.

For example, the CSI may include the following indicators/reports: channel quality indicator (CQI), precoding matrix indicator (PMI), and/or rank indicator (RI).

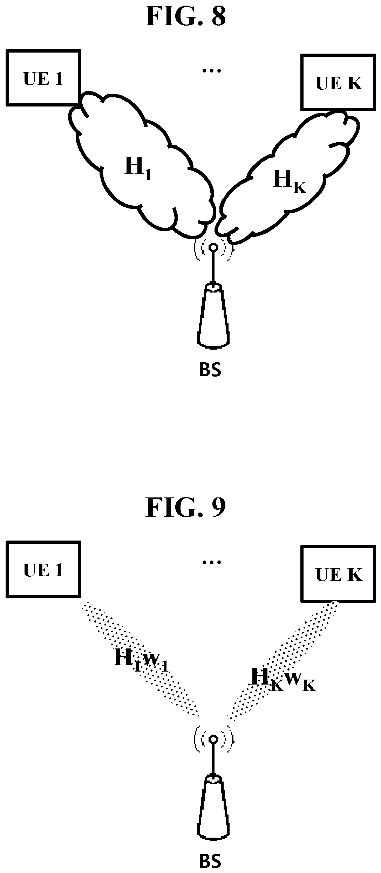

FIGS. 8 and 9 illustrate channel and beam matrices formed between a TRP and UEs.

A channel state may be represented by a channel matrix. It is assumed that a channel matrix representing the channel state between a TRP and UE i is $\mathbf{H}_i$. When the TRP applies a precoder $\mathbf{w}_i$ to transmit to UE i, the transmission reaches UE i through a beam represented by a matrix $\mathbf{H}_i\mathbf{w}_i$. Before the application of the precoding matrix, the transmission signal from the TRP reaches UE i over the channel represented by $\mathbf{H}_i$. After the application of precoder $\mathbf{w}_i$, the transmission signal reaches UE i over the channel represented by $\mathbf{H}_i\mathbf{w}_i$. UE i may determine a channel matrix based on RSs for channel measurement from TRP(s), select a precoder capable of adjusting the phase, amplitude, etc., of a DL signal in a direction favorable to the UE, and provide feedback on the precoder favorable when the BS transmits a signal to the corresponding UE, i.e., a PMI to the BS.

In conventional wireless communication systems, CSI is independently estimated and quantized by each UE and then reported to the BS. Recently, the use of neural networks (NN) is being considered for efficient and distributed channel estimation, quantization, feedback, and DL multiuser precoding in large-scale MIMO systems where the BS serves multiple UEs.

Hereinafter, an NN-based precoding system will be described. In the following description, lowercase or uppercase italic letters represent scalars, while lowercase bold letters and uppercase bold letters represent vectors and matrices, respectively. Calligraphic letters represent sets. For example, $x$, $\mathbf{x}$, $\mathbf{X}$, and $\mathbb{X}$ represent a scalar, vector, matrix, and set, respectively. In addition, $\mathbb{C}$ represents a set of complex numbers, and $\mathbb{C}^{m\times n}$ represents an (m×n)-dimensional complex space. Further, $\mathbf{I}$ represents an identity matrix of appropriate dimensions, and Superscript$(\cdot)^H$ represents the Hermitian transpose. Tr(-) and $\mathbb{E}[\cdot]$ represent the trace and expectation operators, respectively, and $\|\cdot\|_2$ represents

the Euclidean norm of a vector. $\mathcal{CN}$(**0**, **R**) represents the zero-mean circularly symmetric complex Gaussian distribution with a covariance matrix R.

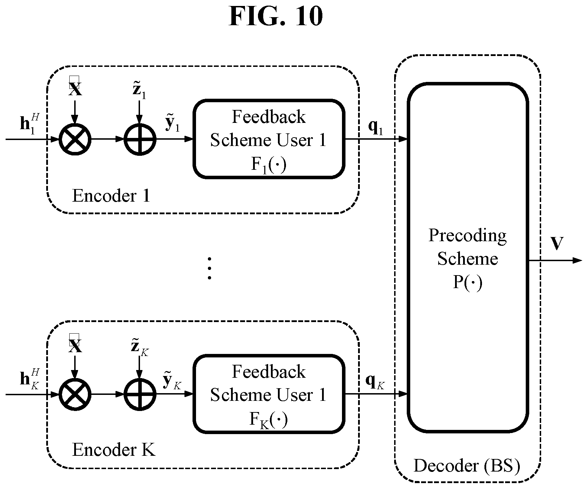

FIG. 10 illustrates an end-to-end multiuser DL precoding system.

Referring to FIG. 10, the end-to-end multiuser precoding system may include a total of UE-side encoders and a BS-side decoder.

The present disclosure considers a DL precoding system where frequency-division duplex (FDD) and finite feedback rates, i.e., rate-limited feedback are assumed. In addition, the number of transmission antennas at the BS is denoted as M, and it is assumed that there are K single-antenna users (i.e., K single-antenna UEs) (where K < M).

In the present disclosure, a signal transmitted by the BS is denoted as **x,** and a symbol for a k-th user is represented by $s_k \in \mathbb{C}^M$ , and a precoding vector for the k-th user is denoted as $\mathbf{v}_k \in \mathbb{C}^M$ . A precoding matrix $\mathbf{V} \in \mathbb{C}^{M \times K}$ with a k-th column $\mathbf{v}_k$ may be defined, and a vector **s** having a symbol $s_k$ transmitted to the k-th user as a k-th element may be defined. In this case, the transmission signal may be expressed as $\mathbf{x} = \sum_{k=1}^{K} \mathbf{v}_k s_k = \mathbf{Vs}$ . That is, linear precoding is performed by the BS. Additionally, for precoding and symbols, the following constraints may be imposed: a total power constraint is Tr(**VV**H) ≤ P and the symbol $s_k$ is normalized such that $\mathbb{E}[\mathbf{ss}^H] = \mathbf{I}$ to ensure no correlation between symbols of different users.

A DL channel gain between the BS and the k-th user is denoted as $\mathbf{h}_k \in \mathbb{C}^M$ . In this case, narrowband block-fading may be assumed. The signal received at the k-th user is given by $y_k = \mathbf{h}_k^H \mathbf{v}_k s_k + \sum_{j \neq k} \mathbf{h}_k^H \mathbf{v}_j s_j + z_k$ , where $z_k \sim \mathcal{CN}$(0, $\sigma^2$) represents the additive white Gaussian noise (AWGN) at the k-th user. Therefore, an achievable rate for the k-th user may be calculated as follows.

[Equation 1]

$$R_k = \log_2 \left( 1 + \frac{|\mathbf{h}_k^H \mathbf{v}_k|^2}{\sum_{j \neq k} |\mathbf{h}_k^H \mathbf{v}_j|^2 + \sigma^2} \right)$$

To achieve the theoretically possible achievable rate in actual communication scenarios, additional methods may be appropriately used along with some implementations considered and described in the present disclosure. In addition, various quality of service (QoS) metrics including the achievable rate may be considered as indicators of communication performance.

To maximize a sum rate $R = \Sigma_k R_k$ (or optimize other communication QoS), an encoder and decoder may be appropriately designed as shown in FIG. 10. In addition, an encoder and decoder may be configured with NNs to find the optimal encoder and decoder.

To allow the BS to determine the optimal precoding matrix, it is crucial that the BS has instantaneous access to CSI. In the present disclosure, the BS acquires CSI through DL training and feedback. In particular, a DL training phase is considered before a data transmission phase to obtain information required for DL precoding at the BS. For example, in the DL training phase preceding the data transmission phase, the BS may transmit DL training pilots $\widetilde{\mathbf{X}} \in \mathbb{C}^{M \times L}$ with a pilot length of L. In this case, pilots transmitted within an l-th column of $\widetilde{\mathbf{X}}$ , i.e., l-th pilot transmission $\widetilde{\mathbf{x}}_l$ satisfy per-transmission power constraint $\|\widetilde{\mathbf{x}}_l\|_2^2 \leq P$ . A signal $\widetilde{\mathbf{y}_k} \in \mathbb{C}^{1 \times L}$ with a length L, which is observed and received at user k, may be expressed as follows.

[Equation 2]

$$\widetilde{\mathbf{y}_k} = \mathbf{h}_k^H \widetilde{\mathbf{X}} + \widetilde{\mathbf{z}_k}$$

In Equation 2,

$$\widetilde{\mathbf{z}_k} \sim \mathcal{CN}(\mathbf{0}, \sigma^2 \mathbf{I})$$

represents the AWGN at user k.

If the feedback scheme adopted by user k is, for example, a rule (or function) $\mathcal{F}_k \colon \mathbb{C}^{1 \times L} \to \{\pm 1\}^B$, the encoder of user k receives $\widetilde{\mathbf{y}_k} \in \mathbb{C}^{1 \times L}$ as an input and outputs B information bits. In other words, the feedback bits of user k may be expressed as $\mathbf{q}_k = \mathcal{F}_k(\widetilde{\mathbf{y}_k})$. The decoder in FIG. 10 may receive feedback bits $\mathbf{q} \triangleq [\mathbf{q}_1^T, \cdots, \mathbf{q}_k^T]^T$ collected from all K users as an input and generate a precoding matrix $\mathbf{V} \in \mathbb{C}^{M \times K}$ as an output. In this case, the DL precoding scheme of the BS may be represented by a function $\mathcal{P} \colon \{\pm 1\}^{KB} \to \mathbb{C}^{M \times K}$.

The objective of the end-to-end multiuser precoding system illustrated in FIG. 10 may be summarized as the following sum rate maximization problem. Various communication QoS metrics besides the sum rate may be used as the objective function for the end-to-end multiuser precoding system.

[Equation 3]

$$\underset{\widetilde{\mathbf{X}}, \{\mathcal{F}_k(\cdot)\}_{\forall k}, \mathcal{P}(\cdot)}{\text{maximize}} \sum_{k=1}^{K} \log_2 \left( 1 + \frac{|\mathbf{h}_k^H \mathbf{v}_k|^2}{\sum_{j \neq k} |\mathbf{h}_k^H \mathbf{v}_j|^2 + \sigma^2} \right)$$

$$\text{subject to} \quad \mathbf{V} = \mathcal{P}\left( \left[ \mathbf{q}_1^T, \dots, \mathbf{q}_K^T \right]^T \right),$$

$$\mathbf{q}_k = \mathcal{F}_k(\mathbf{h}_k^H \widetilde{\mathbf{X}} + \widetilde{\mathbf{z}}_k), \quad \forall k,$$

$$\text{Tr}(\mathbf{V}\mathbf{V}^H) \leq P,$$

$$\|\widetilde{\mathbf{x}}_\ell\|_2^2 \leq P, \quad \forall \ell$$

In particular, Equation 3 represents the problem of maximizing the sum rate in a limited-feedback FDD system. Designing an end-to-end multiuser precoding system as represented in Equation 3 may be seen as finding combinations to maximize the sum rate (or optimize other QoS metrics) for the following three factors:

> $\widetilde{\mathbf{X}}$ : downlink training pilots

> $\{\mathcal{F}_k(\cdot)\}_{\forall k}$ : feedback schemes at users

> $\mathcal{P}(\cdot)$ : precoding scheme at BS

Thus, not only the feedback schemes used by each user and the precoding schemes adopted by the BS but also the training pilots $\widetilde{\mathbf{X}}$ transmitted by the BS are variables for optimization.

Deep learning may be used as a method of finding an optimized end-to-end FDD DL precoding system. In other words, the DL training pilots $\widetilde{\mathbf{X}}$, the feedback schemes $\{\mathcal{F}_k(\cdot)\}_{\forall k}$, and the precoding scheme $\mathcal{P}(\cdot)$ may all be configured with an NN, and the configured NN may be trained to determine optimal NN parameters.

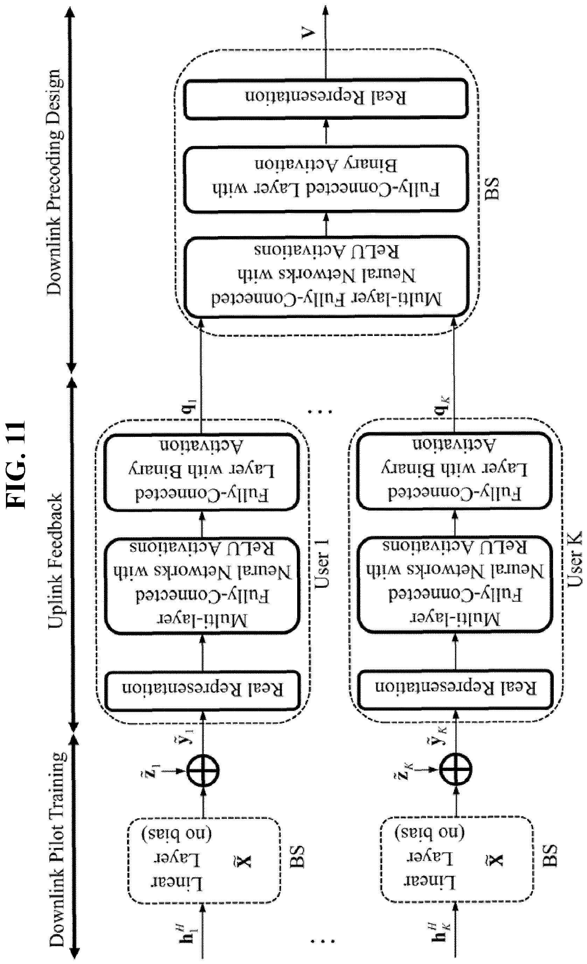

FIG. 11 illustrates an exemplary possible NN architecture when an end-to-end multiuser precoding system is represented with an NN.

A binary activation layer may be used as in the example shown in FIG. 11 such that a binary output is produced by the final layer of a user-side encoder NN (i.e., such that each element of $\mathbf{q}_k \in \{\pm 1\}^B$ is a bipolar feedback bit).

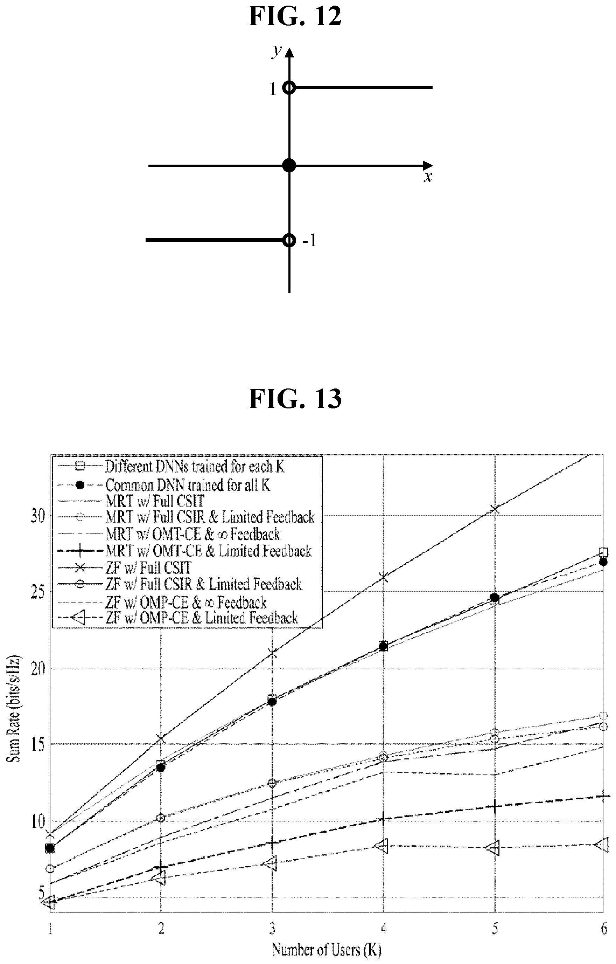

FIG. 12 illustrates a signum function available for an encoder NN according to the present disclosure.

The sign function (or signum function) shown in FIG. 12 may be used as the activation function for the final layer of the encoder NN of FIG. 12.

When channel distribution for different users is independent and identically distributed (i.i.d.), the same NN (with structure as well as parameter set) may be used as an encoder for each user regardless of the number of users $K$ (refer to "*Sohrabi, Foad, Kareem M. Attiah, and Wei Yu. "Deep learning for distributed channel feedback and multiuser precoding in FDD massive MIMO. " IEEE Transactions on Wireless Communications (2021)"*). That is, in the case of i.i.d., different users use common NN weights and biases, and the NN parameters used in all user-side encoders are the same regardless of the number of users $K$. In this case, regardless of the number of users $K$, the same encoder NN used by different users may be a user-side encoder NN obtained via training in a single-user scenario. That is, in the case of i.i.d., for any $K$, the same structure and parameter set (e.g., weights and biases) as the encoder NN used in the case of a single-user may be used in the encoder NN in a scenario of $K$ users as well.

FIG. 13 illustrates precoding performance (e.g., sum rate) according to the number of users $K$. In FIG. 13, "Different DNNs trained for each K" indicates precoding performance when different DNNs trained for each K are used, "Common DNN trained for all K" indicates precoding performance when a common user-side encoder DNN trained for all K is used, "MRT w/ Full CSIT" indicates precoding performance when full CSI is available in a transmitter (e.g. BS) and maximum-ratio transmission (MRT) is used as a precoding method, "MRT w/ Full CSIR & Limited Feedback" indicates precoding performance when a user $k$ transmits perfect knowledge to a BS and the BS uses MRT as a precoding method by transmitting an index of a quantized version of the channel parameters on an error-free B-bit finite-capacity feedback link with the perfect knowledge for channel parameters thereof under assumption of perfect CSI on a user side, "MRT w/ OMP-CE & ∞ Feedback" indicates precoding performance when each user estimates a corresponding channel vector by using orthogonal matching pursuit (OMP) in a DL training phase and subsequently feedbacks the estimated channel to the BS on an infinite-capacity link and the BS constructs an MRT precoder based on the channels estimated by users in the downlink training phase, "MRT" w/ OMP-CE & Limited Feedback" indicates precoding performance when each user estimates a corresponding channel vector by using an OMP in a DL training phase and subsequently feedbacks the estimated channel on a finite-capacity link to the BS and the BS constructs an MRT precoder based on channels estimated by users in the downlink training phase, "ZF w/Full CSIT" indicates precoding performance when full CSI is available in the transmitter (e.g., BS) and zero forcing (ZF) is used as a precoding method, "ZF w/ Full CSIR & Limited Feedback" indicates precoding performance when a user $k$ transmits perfect knowledge to a BS and the BS uses ZF as a precoding method by transmitting an index of a quantized version of the channel parameters on an error-free B-bit finite-capacity feedback link with the perfect knowledge for channel parameters thereof under assumption of perfect CSI on a user side, "ZF w/ OMP-CE & ∞ Feedback" indicates precoding performance when each user estimates a corresponding channel vector by using an OMP in a DL training phase and subsequently feedbacks the estimated channel on an infinite-capacity link to the BS and the BS constructs a ZF precoder based on channels estimated by users in the downlink training phase, and "ZF w/ OMP-CE & Limited Feedback" indicates precoding performance when each user estimates a corresponding channel vector by using an OMP in a DL training phase and subsequently feedbacks the estimated channel on a finite-capacity link to the BS and the BS constructs a ZF precoder based on channels estimated by users in the downlink training phase.

As seen from FIG. 13, comparing performance when different encoder NNs obtained through new training are used every time the number of users $K$ changes ("Different DNNs trained for each $K$") with performance when the same encoder NN is used in all users (in all $K$) irrespective of $K$ ("Common DNN trained for all $K$"), there is almost nothing in a performance difference between the two cases.

FIG. 14 illustrates a BS-side decoder NN. In particular, FIG. 14 illustrates a BS-side decoder NN that is not scalable to the number of users $K$.

In the case of the BS-side decoder NN, whenever the number of users K changes (in proportion to $K$ assuming that the length of feedback bits $q_k$ for a user $k$ does not change), an input size of the decoder NN changes. Whenever the number of users $K$ changes, an output size of the decoder NN also changes. Therefore, there is a problem that the decoder NN architecture changes whenever the number of users $K$ changes. As the number of users varies, not only a new set of decoder NN parameters (e.g., weights and biases) are needed, but also the architecture of the decoder NN itself changes, and thus there is a problem that the decoder is not capable of being scalable at all to the number of users $K$.

In general, NN may have various architectures, and the domain knowledge of human experts may be utilized to design an appropriate architecture suitable for a task given to the NN. The existing end-to-end precoding system described above may advantageously use the same structure and parameter set (e.g., weights and biases) as the encoder NN used in the single-user case as an encoder NN even in $K$-user (i.e., multiuser) scenarios for any $K$. However, the existing end-to-end precoding system lacks domain knowledge in the architecture design of the encoder and decoder NN. FIG. 13 shows that sufficient improvement in precoding performance is to be achieved simply by configuring and training the encoder and decoder with NN, without considering special expert knowledge. However, there is room to expect greater performance improvement when the decoder NN architecture is designed by appropriately utilizing expert knowledge.

A disadvantage of the existing decoder NN structure described above may be summarized into two points as follows.

> The input size and output size of the decoder NN vary depending on the number of users *K*, and the architecture of the decoder NN itself varies, and thus the decoder is not capable of being scalable at all to *K*.
> In the architecture design of the decoder NN, little consideration is given to the domain knowledge of human experts, and thus there is room for greater precoding performance improvement.

To overcome these limitations, the present disclosure describes a BS-side decoder NN architecture that is scalable to the number of users *K* and takes appropriate expert knowledge into account.

Before describing in detail the decoder architecture according to some implementations of the present disclosure, it is assumed in the present disclosure that channel distribution for different users is i.i.d.

Hereinafter, a decoder architecture scalable to the number of users *K*, designed considering appropriate domain knowledge for the purpose of multi-user precoding, is described.

FIG. 15 schematically illustrates encoder and decoder NN structures of the existing end-to-end multi-user precoding system. FIG. 15 is a schematic diagram of the end-to-end multi-user precoding system of FIG. 11 to pay special attention only to the input and output of the decoder NN.

As seen from FIG. 15, in the existing decoder NN structure (when feedback bits for a user *k* are $q_k$), feedback bits $q \triangleq [q_1^T, \cdots, q_K^T]^T$ collected from all *K* users are received as input, and a precoding matrix $V \in \mathbb{C}^{M \times K}$ is generated as output. As described above, the input size and output size change depending on the number of users *K*, and thus the decoder NN structure is not only not scalable at all for K, but also not an architecture designed in consideration of special expert knowledge, and accordingly, there is room for further improvement in precoding performance.

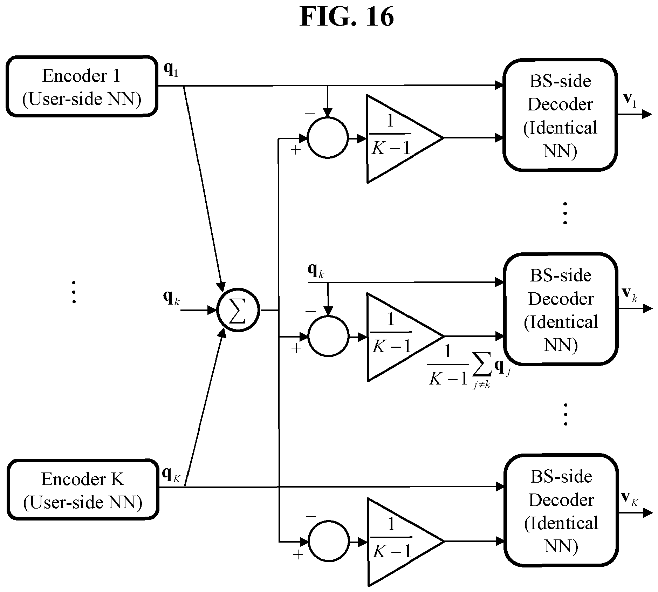

FIG. 16 illustrates a decoder NN architecture according to some implementations of the present disclosure.

Unlike the decoder NN illustrated in FIG. 15 that receives as input the feedback bits collected from all *K* users in only one NN and generates as output the entire precoding matrix (i.e., all precoding matrices) at once, the decoder architecture illustrated in FIG. 16 has a separate decoder NN for each user and has a total of *K* NNs configured in parallel. In the decoder architecture illustrated in FIG. 16, the decoder NN for each user generates only a precoder vector for the corresponding user as an output, and a signal dedicated to the corresponding user is required as an input. A total of two signals per decoder for each user are input to the decoder, and one of the two input signals is feedback bits for the corresponding user (hereinafter referred to as a first input signal). The other input signal (hereinafter referred to as a second input signal) from among the two input signals will be described below.

Before explaining an input signal other than the input signal including feedback bits for the corresponding user from among the two input signals of the decoder NN for each user, the purpose of the end-to-end multi-user precoding system and decoder will be described again to properly consider domain knowledge in a decoder architecture design. Equation 3 described above expresses a maximization problem that takes a sum rate from among various QoS to be used as an indicator of precoding performance as an objective function.

With regard to a fraction term excluding 1 in logarithm in the objective function of Equation 3, it may be seen that the sum rate may be maximized by minimizing a denominator while simultaneously maximizing a numerator of the fraction term. The sum rate is defined to be the sum of the achievable rates for all users, and thus an achievable rate for a user *k* will be considered. The achievable rate $R_k$ of the *k*-th user may be calculated as in Equation 1.

To maximize $R_k$, a signal-to-interference-plus-noise ratio (SINR) may be simply maximized. In Equation 2, the purpose of the decoder NN is to obtain the precoding vector $v_k$ ($k \in \{1, 2, \cdots, K\}$) for maximizing $|h_k^H v_k|^2$ in the numerator and simultaneously minimizing $\sum_{j \neq k} |h_k^H v_j|^2$ in the denominator.

For convenience of explanation, a user *k* may be assumed without loss of generality. For the *k*-th decoder NN to generate $v_k$ for maximizing the numerator $|h_k^H v_k|^2$ of SINR, information about $h_k$ is required. Therefore, $q_k$ corresponding to $h_k$ is input to the decoder NN. An interference term $\sum_{j \neq k'} |h_{k'}^H v_j|^2$ for a user *k'* may be considered to minimize a denominator of SINR in a user *k'* different from the user *k*. In this case, to minimize contribution of $v_k$, which

is an output of the $k$-th decoder NN, to the interference term for a user $k'$, information about all $h_{k'}$ ($k' \in \{1, 2, \cdots, K\} \setminus \{k\}$) channels other than $h_k$ for the user $k$ itself is requried. In this case, $q_{k'}$ ($k' \in \{1, 2, \cdots, K\} \setminus \{k\}$) corresponding to $h_{k'}$ ($k' \in \{1, 2, \cdots, K\} \setminus \{k\}$) may be considered, and $\Sigma_{j \neq k} q_j$ is input to the decoder NN by adding all $q_{k'}$ ($k' \in \{1, 2, \cdots, K\} \setminus \{k\}$). In calculation of $\Sigma_{j \neq k} q_j$, the addition operation is an arithmetic operation not a bitwise operation. For example, when 11 and 10 are added, 01 may be obtained by applying the XOR bitwise operation to 11 and 10, but 21 may be obtained by applying the arithmetic operation to 11 and 10. In other words, in some implementations of the present disclosure, even if a CSI feedback signal is given as a bit stream, the addition operation in calculation of $\Sigma_{j \neq k} q_j$ may not be performed bitwise. In this case,, an appropriate scaling factor (e.g., $\dfrac{1}{K-1}$ ) may be multiplied by $\Sigma_{j \neq k} q_j$ before being input to the decoder NN. The $k$-th decoder NN generates $v_k$ in consideration of the input $\Sigma_{j \neq k} q_j$ to reduce interference from the $k'$-th user ($k' \neq k$).

In summary, in some implementations of the present disclosure, as an input signal of the $k$-th decoder NN, $\Sigma_{j \neq k} q_j$ (hereinafter referred to as a second input signal), which is the sum of feedback bits for all other users except the $k$-th user in addition to feedback bits of the $k$-th user $q_k$ (hereinafter referred to as a first input signal) may be used.

When feedback bits for all users not excluding the $k$-th user are used as the second input signal of the decoder NN for the $k$-th user, the second input signal may be the equalized for all users. From an aspect of an information theory, the fact that certain data is equalized for all users means that a role of the data as information is reduced. In general, the learning (and inference) capability of NN decreases as the NN structure is simplified, and higher learning (and inference) capabilities of the NN may require a more complex NN structure. Therefore, when other conditions are the same, when feedback bits for all users not excluding the $k$-th user are used as the second input signal of the decoder NN, the more complex NN structure with larger capability may be required compared with the case in which feedback bits for users excluding the $k$-th user are used as the second input signal of the decoder NN. That is, according to some implementations of the present disclosure, when feedback bits for users excluding the $k$-th user are used as the second input signal to the decoder NN, it may facilitate learning of the NN.

In some implementations of the present disclosure, $K$ parallel decoders NNs share the same structure and parameter set (e.g., weights and biases) with each other. In other words, decoders for different users use exactly the same NN. Therefore, when there is only one decoder NN and input signals for respective users are sequentially input to the only decoder NN, it may be seen that a precoding vector for the corresponding user is sequentially output as an output. When a parameter set of the decoder N is trained, this aspect is exactly valid. The decoders NN for respective users are the same, and thus all $K$ decoders NNs are trained while sharing a common parameter set. That is, the shared common parameters are trained.

The characteristics of the decoder NN architecture according to some implementations of the present disclosure are broadly divided into three categories and summarized again below.

    1) There are multiple parallel decoders NNs as many as the number of users, and each decoder NN outputs a precoding vector for the corresponding user.
A decoder NN is configured for each user, and the decoder NN for each user generates only the precoding vector $v_k$ for the corresponding user $k$ as an output. Therefore, a total of $K$ decoders NNs may be considered to exist in parallel.
    2) As an input to each decoder NN, input the sum signal of feedback bits, which is a signal processed with appropriate consideration of expert knowledge.
In consideration of each decoder NN described in 1) above, $<< \Sigma_{j \neq k} q_j$, which is the sum of feedback bits for all other users except for the $k$-th user, together with the feedback bits $q_k$ of the $k$-th input may be used as the input signal of the $k$-th decoder NN. Here, sum is an arithmetic operation, not a bitwise operation. The sum signal of the feedback bits may be multiplied by an appropriate scaling factor (e.g., $\dfrac{1}{K-1}$ ) before being input to the input of the decoder NN. For example, $\dfrac{1}{K-1} \sum_{j \neq k} q_j$ may be used as the input signal of the $k$-th decoder NN.
    3) The structure and parameter set of the decoder NN for all users are the same.

The $K$ parallel decoders NNs described above in 1) and 2) not only have the same structure but also use the same parameter set (e.g., weights and biases). That is, $K$ decoders for different users use exactly the same NN. Therefore, in some implements, when there is only one decoder NN and input signals for respective users are sequentially input to the only decoder NN, a precoding vector for the corresponding user may be sequentially output as an output. Therefore, during a training process, shared common parameters between decoders NNs for respective users are trained.

All three features from 1) to 3) above are expressed in FIG. 16.

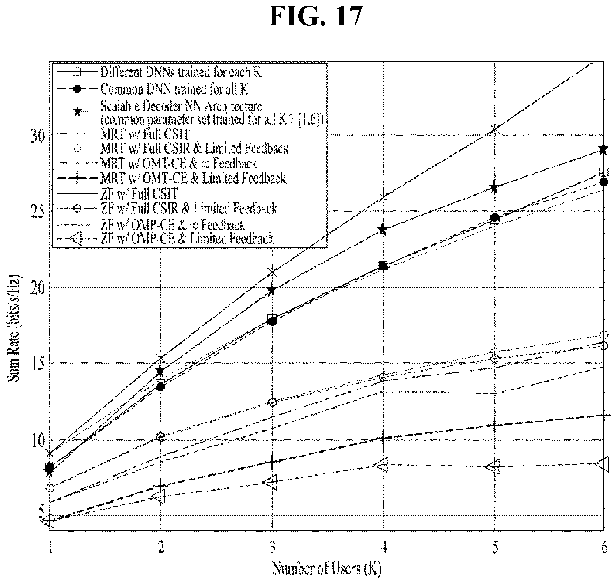

FIG. 17 illustrates precoding performances of a decoder NN structure and different benchmark schemes according to some implementations of the present disclosure. In particular, FIG. 17 shows the precoding performance (e.g., sum rate) of the decoder NN structure depending on the number of users $K$ and the precoding performance (e.g. sum rate) of the different benchmark scheme depending on the number of users $K$ according to some implementations of the present disclosure. In detail, in FIG. 17, "Scalable Decoder NN Architecture" represents the precoding performance of the decoder NN depending on the number of users $K$ for the decoder NN structure according to some implementations of the present disclosure and the remaining curves represent the precoding performances mentioned in FIG. 13. For reference, the channel model and system parameters assumed in the simulation of FIG. 17 are as follows, and simulation settings not specified in the present disclosure are described in the document "Sohrabi, Foad, Kareem M. Attiah, and Wei Yu. "Deep learning for distributed channel feedback and multiuser precoding in FDD massive MIMO." IEEE Transactions on Wireless Communications (2021)".

* mmWave propagation environment: limited number of scatters
* Sparse channel of $k$-th user:

[Equation 4]

$$\mathbf{h}_k = \frac{1}{\sqrt{L_p}} \sum_{\ell=1}^{L_p} \alpha_{\ell,k} \mathbf{a}_t\left(\theta_{\ell,k}\right)$$

Here, $L_p$ is the propagation paths, $\alpha_{l,k}$ is a complex gain of the $l$-th path between the BS and the user $k$, $\theta_{l,k}$ is a corresponding angle of departure (AoD), and a transmit array response vector for a uniform linear array with a wavelength $\lambda$, antenna spacing $d$, and and M antenna elements, $a_t(\theta) = [1, e^{j\frac{2\pi}{\lambda}d\sin(\theta)}, ..., e^{j\frac{2\pi}{\lambda}d(M-1)\sin(\theta)}]^T$ is satisfied. The simulation settings in FIG. 17 are as follows.

* $M$ = 64 half-wavelength-spaced antennas
* $B$ = 30 (number of feedback bits)
* $L$ = 8 (pilot length)
* 

$$SNR = 10\log_{10}\left(\frac{P}{\sigma^2}\right) = 10dB$$

* $L_p$ = 2 path environment
* $\alpha_{l,k} \sim \mathcal{CN}(0,1)$
* $\theta_{l,k} \sim \mathcal{U}(-60°, +60°)$

The scalable decoder NN structure according to some implementations of the present disclosure is designed in appropriate consideration of the domain knowledge of a human expert, and thus the precoding performance may be improved, as illustrated in FIG. 17.

In the NN structure of the existing end-to-end multi-user precoding system, the structure of the decoder NN changes as the number of users $K$ changes, and thus the parameter set of the decoder NN changes. In contrast, the scalable decoder NN structure according to some implementations of the present disclosure may use the same parameter set regardless of the number of users $K$. In FIG. 17, "Scalable Decoder NN Architecture" is the result of an experiment using a common parameter set for all $K \in \{1, 2, 3, 4, 5, 6\}$, and as seen from "Scalable Decoder NN Architecture" in FIG. 17, even if identical weights and biases are used regardless of the number of users $K$, precoding performance is improved. In the precoding system described in FIGS. 13 and 14, a plurality of NNs and parameter sets that vary depending on the user $K$ are required (in terms of a side of at least on the decoder), but the decoder NN structure according to some implementations of the present disclosure according to some implements of the present disclosure requires only one common NN and parameter set, and even if only the same NN and parameter set are used regardless of $K$, precoding performance is improved compared to the existing technologies.

For reception of CSI at a BS, the BS may perform operations according to some implementations of the present disclosure. The BS may include: at least one transceiver; at least one processor; and at least one computer memory operably connected to the at least one processor and configured to store instructions that, when executed, cause the at least one processor to perform the operations according to some implementations of the present disclosure. A processing device for the BS may include: at least one processor; and at least one computer memory operably connected to the at least one processor and configured to store instructions that, when executed, cause the at least one processor to perform the operations according to some implementations of the present disclosure. A computer-readable (non-transitory) storage medium may be configured to store at least one computer program including instructions that, when executed by at least one processor, cause the at least one processor to perform the operations according to some implementations of the present disclosure. A computer program or computer program product may include instructions stored on at least one computer-readable (non-transitory) storage medium and, when executed, cause (at least one processor) to perform the operations according to some implementations of the present disclosure.

In the BS, the processing device, the computer-readable (non-transitory) storage medium, and/or the computer program product, the operations include receiving respective CSI feedbacks q_1 to q_K from user devices 1 to K, and determining a precoding vector for a user device k based on the CSI feedbacks q_1 to q_K. Here, k = 0, ..., and K. The determining of the precoding vector for the user device k based on the CSI feedbacks q_1 to q_K may include determining the precoding vector for the user device k through a decoder based on i) a sum value of CSI feedbacks q_1 to q_k-1 and q_k+1 to q_K from remaining user devices 1 to k-1 and k+1 to K excluding the user device k from among the user devices 1 to K and ii) CSI feedback q_k from the user device k.

In some implementations of the present disclosure, the decoder may include a single CSI decoder. The precoding vector for each of the user devices 1 to K may be determined through the single CSI decoder.

In some implementations of the present disclosure, the decoder may include respective CSI decoders D_1 to D_K for the user devices 1 to K. The precoding vector for the user device k may be determined through the CSI decoder D_k from among the CSI decoders D_1 to D_K. The CSI decoders D_1 to D_K may use the same weight and the same bias for all K.

In some implementations of the present disclosure, the sum value of the CSI feedbacks q_1 to q_k-1 and q_k+1 to q_K may be determined through an arithmetic operation on the CSI feedbacks q_1 to q_k-1 and q_k+1 to q_K.

In some implementations of the present disclosure, the determining of the precoding vector for the user device k based on the CSI feedbacks q_1 to q_K may include i) inputting the product of the sum of the CSI feedbacks q_1 to q_k-1 and q_k+1 to q_K and 1/(K-1) to the decoder, and ii) inputting the CSI feedback q_k to the decoder.

The examples of the present disclosure as described above have been presented to enable any person of ordinary skill in the art to implement and practice the present disclosure. Although the present disclosure has been described with reference to the examples, those skilled in the art may make various modifications and variations in the example of the present disclosure. Thus, the present disclosure is not intended to be limited to the examples set for the herein, but is to be accorded the broadest scope consistent with the principles and features disclosed herein.

**Industrial Applicability**

The implementations of the present disclosure may be used in a BS, a UE, or other equipment in a wireless communication system.

**Claims**

1. A method of receiving channel state information (CSI) by a base station (BS) in a wireless communication system, the method comprising:

    receiving respective CSI feedbacks q_1 to q_K from user devices 1 to K; and
    determining a precoding vector for a user device k based on the CSI feedbacks q_1 to q_K, where k = 0, ..., and K, wherein the determining of the precoding vector for the user device k based on the CSI feedbacks q_1 to q_K includes determining the precoding vector for the user device k through a decoder based on i) a sum value of CSI feedbacks q_1 to q_k-1 and q_k+1 to q_K from remaining user devices 1 to k-1 and k+1 to K excluding the user device k from among the user devices 1 to K and ii) CSI feedback q_k from the user device k.

2. The method of claim 1, wherein the decoder includes a single CSI decoder, and

wherein the precoding vector for each of the user devices 1 to K is determined through the single CSI decoder.

3. The method of claim 1, wherein the decoder includes respective CSI decoders D_1 to D_K for the user devices 1 to K,

   wherein the precoding vector for the user device k is determined through a CSI decoder D_k from among the CSI decoders D_1 to D_K, and
   wherein the CSI decoders D_1 to D_K use a same weight and a same bias for all K.

4. The method of claim 1, wherein a sum value of the CSI feedbacks q_1 to q_k-1 and q_k+1 to q_K is determined through an arithmetic operation on the CSI feedbacks q_1 to q_k-1 and q_k+1 to q_K.

5. The method of claim 1, wherein the determining of the precoding vector for the user device k based on the CSI feedbacks q_1 to q_K includes:

   i) inputting a product of a sum of the CSI feedbacks q_1 to q_k-1 and q_k+1 to q_K and 1/(K-1) to the decoder; and
   ii) inputting the CSI feedback q_k to the decoder.

6. A base station (BS) for receiving channel state information (CSI) in a wireless communication system, the BS comprising:

   at least one transceiver;
   at least one processor; and
   at least one computer memory operably connected to the at least one processor and configured to store instructions that, when executed, cause the at least one processor to perform operations including:

   receiving respective CSI feedbacks q_1 to q_K from user devices 1 to K; and
   determining a precoding vector for a user device k based on the CSI feedbacks q_1 to q_K, where k = 0, ..., and K,
   wherein the determining of the precoding vector for the user device k based on the CSI feedbacks q_1 to q_K includes determining the precoding vector for the user device k through a decoder based on i) a sum value of CSI feedbacks q_1 to q_k-1 and q_k+1 to q_K from remaining user devices 1 to k-1 and k+1 to K excluding the user device k from among the user devices 1 to K and ii) CSI feedback q_k from the user device k.

7. The BS of claim 6, wherein the decoder includes a single CSI decoder, and
   wherein the precoding vector for each of the user devices 1 to K is determined through the single CSI decoder.

8. The BS of claim 6, wherein the decoder includes respective CSI decoders D_1 to D_K for the user devices 1 to K,

   wherein the precoding vector for the user device k is determined through a CSI decoder D_k from among the CSI decoders D_1 to D_K, and
   wherein the CSI decoders D_1 to D_K use a same weight and a same bias for all K.

9. The BS of claim 6, wherein a sum value of the CSI feedbacks q_1 to q_k-1 and q_k+1 to q_K is determined through an arithmetic operation on the CSI feedbacks q_1 to q_k-1 and q_k+1 to q_K.

10. The BS of claim 6, wherein the determining of the precoding vector for the user device k based on the CSI feedbacks q_1 to q_K includes:

    i) inputting a product of a sum of the CSI feedbacks q_1 to q_k-1 and q_k+1 to q_K and 1/(K-1) to the decoder NN; and
    ii) inputting the CSI feedback q_k to the decoder.

11. A processing device comprising:

    at least one processor; and
    at least one computer memory operably connected to the at least one processor and configured to store instructions that, when executed, cause the at least one processor to perform operations including:

receiving respective channel state information (CSI) feedbacks q_1 to q_K from user devices 1 to K; and determining a precoding vector for a user device k based on the CSI feedbacks q_1 to q_K, where k = 0, ..., and K,

wherein the determining of the precoding vector for the user device k based on the CSI feedbacks q_1 to q_K includes determining the precoding vector for the user device k through a decoder based on i) a sum value of CSI feedbacks q_1 to q_k-1 and q_k+1 to q_K from remaining user devices 1 to k-1 and k+1 to K excluding the user device k from among the user devices 1 to K and ii) CSI feedback q_k from the user device k.

**FIG. 1**

# FIG. 2

# FIG. 3

# FIG. 4

# FIG. 5

# FIG. 6

Input layer

$x_{1,w}$ $x_{13}$ $x_{12}$ $x_{11}$ $x_{23}$ $x_{22}$ $x_{21}$ $x_{2,w}$ $x_{33}$ $x_{32}$ $x_{31}$ $x_{3,w}$ $x_{h-1,w}$ $x_{h-1,3}$ $x_{h-1,2}$ $x_{h-1,1}$ $x_{h,w}$ $x_{h,3}$ $x_{h,2}$ $x_{h,1}$

**Input-hidden weight** $\mathbf{W}^{h \times w \times h \times w}$

Hidden layer

$z_{1,w}$ $z_{13}$ $z_{12}$ $z_{11}$ $z_{23}$ $z_{22}$ $z_{21}$ $z_{2,w}$ $z_{33}$ $z_{32}$ $z_{31}$ $z_{3,w}$ $z_{h-1,w}$ $z_{h-1,3}$ $z_{h-1,2}$ $z_{h-1,1}$ $z_{h,w}$ $z_{h,3}$ $z_{h,2}$ $z_{h,1}$

**Hidden-output weight** $\mathbf{W}^{h \times w \times h \times w}$

Output layer

$s_{1,w}$ $s_{13}$ $s_{12}$ $s_{11}$ $s_{23}$ $s_{22}$ $s_{21}$ $s_{2,w}$ $s_{33}$ $s_{32}$ $s_{31}$ $s_{3,w}$ $s_{h-1,w}$ $s_{h-1,3}$ $s_{h-1,2}$ $s_{h-1,1}$ $s_{h,w}$ $s_{h,3}$ $s_{h,2}$ $s_{h,1}$

EP 4 432 574 A1

# FIG. 7

EP 4 432 574 A1

# FIG. 8

# FIG. 9

# FIG. 10

**FIG. 11**

Downlink Pilot Training    Uplink Feedback    Downlink Precoding Design

$\mathbf{h}_1^H$

Linear Layer (no bias) $\tilde{\mathbf{X}}$

BS

$\tilde{\mathbf{z}}_1$

$\tilde{\mathbf{y}}_1$

Real Representation

Multi-layer Fully-Connected Neural Networks with ReLU Activations

Fully-Connected Layer with Binary Activation

$\mathbf{q}_1$

User 1

$\mathbf{h}_K^H$

Linear Layer (no bias) $\tilde{\mathbf{X}}$

BS

$\tilde{\mathbf{z}}_K$

$\tilde{\mathbf{y}}_K$

Real Representation

Multi-layer Fully-Connected Neural Networks with ReLU Activations

Fully-Connected Layer with Binary Activation

$\mathbf{q}_K$

User K

Multi-layer Fully-Connected Neural Networks with ReLU Activations

Fully-Connected Layer with Binary Activation

Real Representation

V

BS

EP 4 432 574 A1

# FIG. 12

# FIG. 13

# FIG. 14

| Encoder 1 (User-side NN) | |
| Encoder 2 (User-side NN) | Decoder (BS-side NN) |

(a) K = 2

| Encoder 1 (User-side NN) | |
| Encoder 2 (User-side NN) | |
| Encoder 3 (User-side NN) | Decoder (BS-side NN) |
| Encoder 4 (User-side NN) | |
| Encoder 5 (User-side NN) | |

(b) K = 5

# FIG. 15

Encoder 1 (User-side NN) —— $\mathbf{q}_1$ ——→ Decoder (BS-side NN) —— Precoding Matrix →$\mathbf{V}$

⋮  ⋮

Encoder K (User-side NN) —— $\mathbf{q}_K$ ——→

# FIG. 16

# FIG. 17

Legend:
- Different DNNs trained for each K
- Common DNN trained for all K
- Scalable Decoder NN Architecture (common parameter set trained for all $K \in [1,6]$)
- MRT w/ Full CSIT
- MRT w/ Full CSIR & Limited Feedback
- MRT w/ OMT-CE & $\infty$ Feedback
- MRT w/ OMT-CE & Limited Feedback
- ZF w/ Full CSIT
- ZF w/ Full CSIR & Limited Feedback
- ZF w/ OMP-CE & $\infty$ Feedback
- ZF w/ OMP-CE & Limited Feedback

Y-axis: Sum Rate (bits/s/Hz)
X-axis: Number of Users (K)

## INTERNATIONAL SEARCH REPORT

| International application No. |
| --- |
| **PCT/KR2021/016433** |

| A. | CLASSIFICATION OF SUBJECT MATTER |
| --- | --- |
| | **H04B 7/06**(2006.01)i; **H04B 7/0456**(2017.01)i; **H04L 1/00**(2006.01)i |

According to International Patent Classification (IPC) or to both national classification and IPC

| B. | FIELDS SEARCHED |
| --- | --- |

Minimum documentation searched (classification system followed by classification symbols)

H04B 7/06(2006.01); G06N 20/00(2019.01); H04B 7/0456(2017.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 채널 상태 정보(channel state information), 프리코딩 벡터(precoding vector), 피드백(feedback), 디코더(decoder), 신경망(neural network)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| DA | SOHRABI, Foad et al. Deep Learning for Distributed Channel Feedback and Multiuser Precoding in FDD Massive MIMO. arXiv:2007.06512v2 [cs.IT]. 26 January 2021.<br>See sections II.B and III.A. | 1-11 |
| A | MASHHADI, Mahdi Boloursaz et al. Distributed Deep Convolutional Compression for Massive MIMO CSI Feedback. arXiv:2003.04684v2 [eess.SP]. 06 September 2020.<br>See section IV.A; and figures 2-3. | 1-11 |
| A | KONG, Kyeongbo et al. Knowledge Distillation-aided End-to-End Learning for Linear Precoding in Multiuser MIMO Downlink Systems with Finite-Rate Feedback. arXiv:2008.04147v2 [eess.SP]. 23 March 2021.<br>See sections II.A-III.C. | 1-11 |
| A | US 2021-0273707 A1 (QUALCOMM INCORPORATED) 02 September 2021 (2021-09-02)<br>See paragraphs [0065]-[0141]; and figures 4-12. | 1-11 |
| A | US 2021-0250068 A1 (KOREA UNIVERSITY RESEARCH AND BUSINESS FOUNDATION) 12 August 2021 (2021-08-12)<br>See paragraphs [0045]-[0137]; and figures 1-7. | 1-11 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **03 August 2022** | **04 August 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/016433**

| Patent document cited in search report | | | Publication date (day/month/year) | Patent family member(s) | | | Publication date (day/month/year) |
|---|---|---|---|---|---|---|---|
| US | 2021-0273707 | A1 | 02 September 2021 | WO | 2021-173331 | A1 | 02 September 2021 |
| US | 2021-0250068 | A1 | 12 August 2021 | KR | 10-2021-0101582 | A | 19 August 2021 |
|  |  |  |  | KR | 10-2334011 | B1 | 01 December 2021 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SOHRABI, FOAD ; KAREEM M. ATTIAH ; WEI YU.** Deep learning for distributed channel feedback and multiuser precoding in FDD massive MIMO. *IEEE Transactions on Wireless Communications,* 2021

- **SOHRABI, FOAD ; KAREEM M. ATTIAH ; WEI YU.** Deep learning for distributed channel feedback and multiuser precoding in FDD massive MIMO. *IEEE Transactions on Wireless Communications,* 2021